# EUROPEAN PATENT APPLICATION

(11) **EP 1 591 869 A1**
(43) Date of publication of application: **02.11.2005**
(21) Application number: 04010324.4
(22) Date of filing: 30.04.2004
(51) Int. Cl.: G06F 1/16

(54) **A protective sleeve structure for a portable electric product**

(71) Applicant: Aplux Communications Ltd., Taipei City, Taiwan R.O.C. (TW)
(72) Inventor: Jao, Hai-Ping, Taipei City Taiwan (CN)
(74) Representative: Viering, Jentschura & Partner

(57) **Abstract**

A protective sleeve structure for a portable electric product mainly comprises a protective sleeve. The protective sleeve includes a first body and a second body. A sticking-layer is paved on each bottom surface of the first body and the second body, and a zipper is sewn on the both rims of the first body and the second body so the protective sleeve can be opened and closed by the zipper. The top end of support-plate links with the top end of the second body, and the bottom portion of the support-plate is sewn on at least one or more Velcro. When the user does not want to operate the electric product, the Velcro of the support-plate sticks with the sticking-layer of the second body thus the support-plate is laid on the bottom surface of the second body flatly not to affect the placement of the electric product, thus the user can place the electric product in the protective sleeve as a carryon. When the user does want to operate the electric product, the Velcro on the bottom end of the support-plate sticks with the sticking-layer of the bottom surface of the first body 11 to have the support-plate being inclined so the electric product can be leaned on the support-plate. Hence the user can operate the electric product anytime and anywhere.

## Description

### BACKGROUND OF THE INVENTION

### 1. Field of the invention

This invention relates to a protective sleeve structure for a portable electric product, particularly to a protective sleeve structure for a portable electric product capable of air permeability and heat diffusivity by using a way to link the support-plate with the protective sleeve, which facilitates an electric product, contained in the protective sleeve, can be operated conveniently.

### 2. DESCRIPTION OF THE PRIOR ART

In general, a conventional leather sleeve for a portable electric product is used for merely containing the electric product for personal carrying. Contained in the conventional sleeve, the electric product cannot be operated, or the heat generated from the running product cannot be diffused smoothly as the sleeve coating the electric product even the product can be operated. Operating under high temperature, it is possible that the electric product may have a breakdown or its components may be damaged.

Furthermore, the electric product operated by the user is placed on the desk or held by hand generally. Since the heat cannot be diffused from the back of the electric product, this will more or less affect the operating performance of the electric product and hence the user cannot hold the electric product by hand for a long time and cause the electric product inconvenient for user's operation.

Accordingly, it can be seen that the above-described conventional products still has many drawbacks, and are not designed well, and need to be improved urgently.

In view of disadvantages derived from the above-described conventional sleeves, the present inventor had devoted to improve and innovate, and, after studying intensively for years, developed successfully a protective sleeve structure for a portable electric product according to the invention.

### SUMMARY OF THE INVENTION

These features and advantages of the present invention will be fully understood and appreciated from the following detailed description of the accompanying Drawings.

The object of present invention is to provide a protective sleeve structure for a portable electric product which uses a support-plate with features of sticking and pivotal-lift to flatly stick with the second body so the placement of the electric product is not affected by the support-plate. If the user want to use the electric product, the support-plate can be pivotal-lifted with a certain angle and the bottom end of the support-plate can be linked up with the bottom surface of the first body at appropriate position such that the support-plate keeps inclined and the front portion of the first body forms a space for standing the electric product, thus the user can operate the electric product anytime and anywhere, and not limited by the environment.

The another object of the present invention is to provide a protective sleeve structure for a portable electric product wherein the heat generated from the electric product leaned upon the support-plate can be fast diffused through the permeable-net installed on the support-plate such that the temperature of the electric product can be reduced.

A protective sleeve structure for a portable electric product according to the present invention capable of achieving the above-mentioned objects comprises a protective sleeve and a support-plate. The protective sleeve mainly includes a first body and a second body. A sticking-layer is paved with each bottom surface of the first body and the second body, and a zipper is installed around both rims of the first body and the second body so the protective sleeve can be opened or closed via the linkage of the zipper. The top end of the support-plate links with the top end of the second body so the support-plate can be pivotal-lifted. At least one or more Velcro is sewn on the bottom end of the support-plate and a permeable-net is installed with the support-plate. Thus, the electric product can be leaned on the support-plate and the heat generated from the electric product can be diffused more with the help of the permeable-net. When the user does not want to operate the electric product, the Velcro of the support-plate can stick with the sticking-layer of the second body to have the support-plate sticking with the sticking-layer on the bottom surface of the second body flatly such that the user can place the electric product in the protective sleeve as a carryon. When the user wants to operate the electric product, using the feature that the support-plate can be pivotal-lifted, the support-plate is pivotal-lifted for a certain angle, the Velcro on the bottom end of the support-plate is stuck with the sticking-layer of the first body at an appropriate position to have the support-plate being inclined and keeping a spacing with the front end of the first body, and thus form a space for standing the electric product between the front end of the first body and the support-plate such that the user can operate the electric product anytime and anywhere.

### BRIEF DESCRIPTION OF THE DRAWINGS

Fig. 1A, 1B, and 1C are stereo schematic diagrams of a protective sleeve structure for a portable electric product according to the present invention;
Fig. 2 is a view diagram of one embodiment of a protective sleeve structure for a portable electric product according to the present invention; and
Fig. 3 is a view diagram of further one embodiment of a protective sleeve structure for a portable electric product according to the present invention.

### DETAILED DESCRIPTION OF THE PREFERRED EMBODIMENT

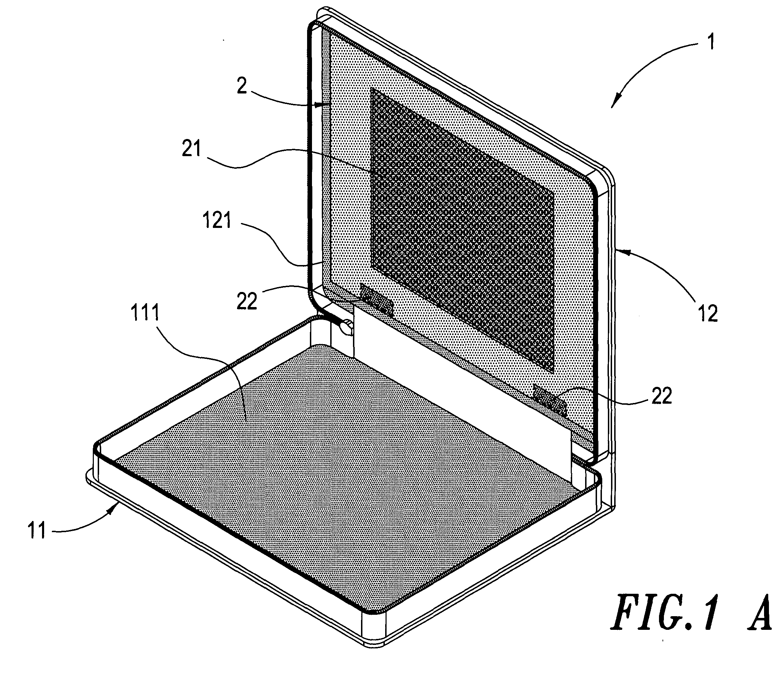

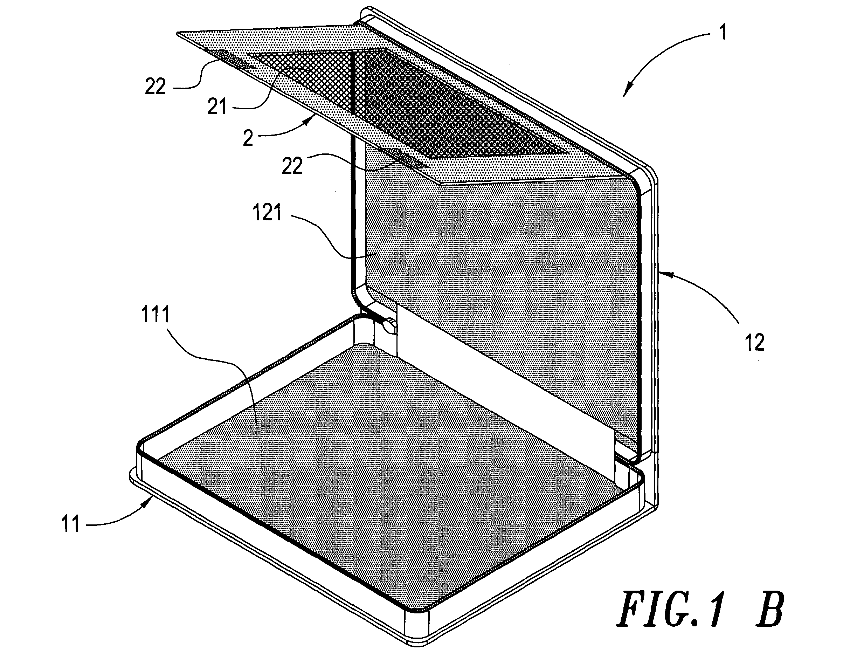

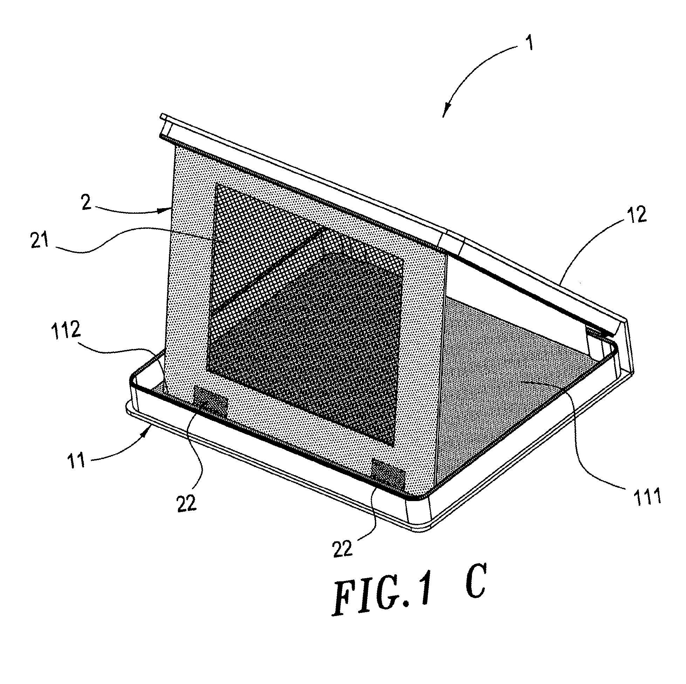

Referring to Fig. 1A, 1B, 1C, Fig.2, and Fig.3, a protective sleeve structure for a portable electric product according to the present invention mainly comprises:

A protective sleeve 1, the protective sleeve 1 can contain an electric product, primarily including a first, second body 11,12, sticking-layers 111,121 are paved on both bottoms of the first body and second body 11,12 respectively, the sticking-layer 111,121 can be flannelette or other weaving capable of being stuck by a Velcro, and the first body and second body 11,12 are associated by a zipper using to control the opening and closing of the protective sleeve 1.

A support-plate 2, a permeable-net 21 installed on the support-plate 2, at least one or more Velcro 22 sewn on the bottom end of the support-plate 2 and the Velcro 22 extends to the back of the bottom end of the support-plate 2; the top end of the support-plate 2 links with the top end of the second body 12 to enable the pivotal-lift feature of the support-plate 2;

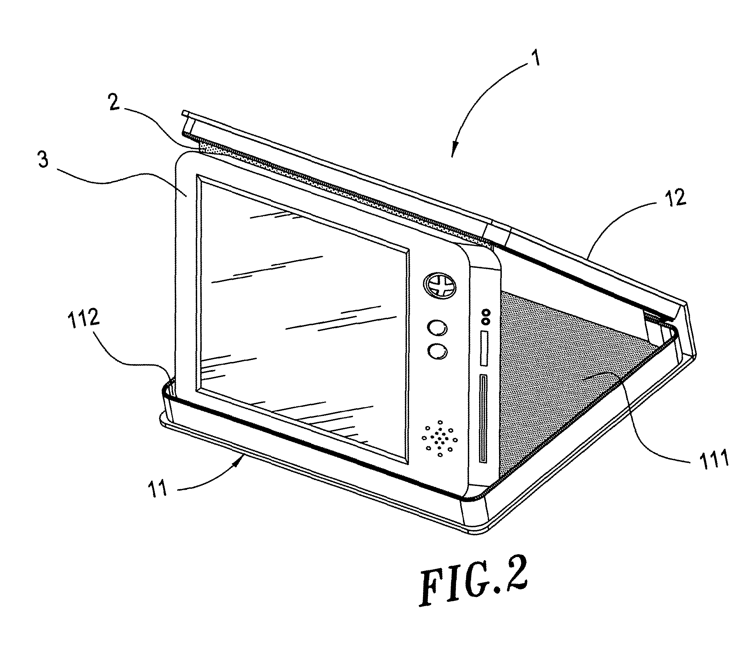

When the user does not want to operate the electric product 3, using the Velcro 22 of the support-plate 2 to stick with the sticking-layer 121 of the second body 12 so the support-plate 2 can be stuck firmly and flatly with the sticking-layer 121 on the bottom surface of the second body 12 not to affect the placement of the electric product 3 so the user can place the electric product 3 in the protective sleeve 1 as a carryon. When the user want to operate the electric product 3, using the feature of the support-plate 2 can be pivotal-lifted to pivotal-lift the support-plate 2 for a certain angle, and sticking the Velcro 22 on the bottom end of the support-plate 2 with the sticking-layer 111 of the bottom surface of the first body 11 at an appropriate position to have the support-plate 2 being inclined and keeping a spacing with the front end of the first body 11, and then forming a space for standing the electric product 112 between the front end of the first body 11 and the support-plate 2, as shown in Fig.2, so the electric product 3 can be leaned on the support-plate 2 firmly and the heat generated from the electric product 3 can be diffused through the permeable-net 21 immediately. Hence the user can operate the electric product 3 with easiness.

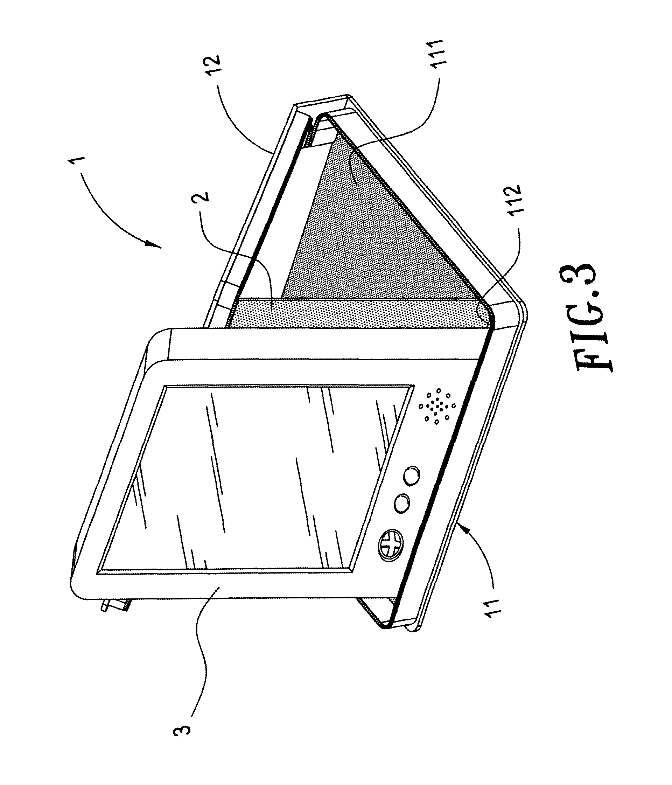

Alternatively, the user can rotate the electric product 3 for a certain angle, as shown in Fig.3, thus the electric product can be operated with an optimal operating angle. This function meets the criteria of the ergonomics and the user can operate the electric product anytime and anywhere.

Compared with other conventional technology, the protective sleeve structure for a portable electric product according to the present invention has the following advantages:
1. The present invention employs a support-plate having the features of sticking and being pivotal-lifted, capable of sticking on the sticking layer of the second body flatly not to affect the placement of the electric product, so the user can place the electric product into the protective sleeve as a carryon. When the user want to operate the electric product, the user merely pivotal-lifts the support-plate for a certain angle and sticks the bottom end of the support-plate with the sticking-layer of the bottom surface of the first body at an appropriate position to have the support-plate being inclined and the front portion of the first body forming a space for standing the electric product. Thus the user can operate the electric product, not limited by the environment, easily and conveniently.
2. The present invention employs a permeable-net installed on the support-plate to facilitate diffusing heat, generated from a running electric product, through the permeable-net on the support-plate, to reduce the temperature and stabilize the operation of the electric product.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A protective sleeve structure for a portable electric product, which comprising at least:
A protective sleeve1, the protective sleeve 1 mainly including a first body11 and a second body12, and a sticking-layer 111, 112 being paved on each bottom surface of the first body 11 and the second body12;
**characterized by**:
A support-plate2, a permeable-net21 being installed on the support-plate2, at least one or more Velcro22 being installed on the bottom end portion of the support-plate2, and the Velcro22 extending to the back of the bottom surface of the support-plate2; the top end of the support-plate2 linking with the top end of the second body12 such that the support-plate2 has a feature that can be pivotal-lifted, and when the Velcro22 of the support-plate2 sticking with the sticking-layer121 of the second body12 so the support-plate2 can stick firmly and flatly with the sticking-layer121 on the bottom surface of the second body 12.

2. The protective sleeve structure for a portable electric product as recited in claim 1, wherein the sticking-layer 111,121 can be flannelette or other weaving capable of being stuck by a Velcro22.

3. The protective sleeve structure for a portable electric product as recited in claim 1, wherein the support-plate2 can be pivotal-lifted for a certain angle and stuck on the sticking-layer 111 on the bottom surface of the first body 11, using the feature of the support-plate2 that can be pivotal-lifted, to have the support-plate2 be inclined and maintaining a spacing with the front end of the first body11, and thus forming a space 112 for standing the electric product between the front end of the first body 11 and the support-plate 12.
